Europäisches Patentamt

European Patent Office

Office européen des brevets

(19)

(11) Veröffentlichungsnummer: **0 242 730**
**B1**

(12) **EUROPÄISCHE PATENTSCHRIFT**

(45) Veröffentlichungstag der Patentschrift:
**13.06.90**

(51) Int. Cl.⁵: **B65G 1/04**, B66F 9/07

(21) Anmeldenummer: **87105304.7**

(22) Anmeldetag: **10.04.87**

(54) **Regalanlage.**

(30) Priorität: **24.04.86 DE 3613904**

(43) Veröffentlichungstag der Anmeldung:
**28.10.87 Patentblatt 87/44**

(45) Bekanntmachung des Hinweises auf die Patenterteilung:
**13.06.90 Patentblatt 90/24**

(84) Benannte Vertragsstaaten:
**BE CH FR GB LI NL SE**

(56) Entgegenhaltungen:
**DE-A- 2 203 565**
**DE-A- 2 535 208**
**DE-A- 3 205 765**
**DE-A- 3 309 190**
**DE-U- 1 892 158**
**DE-U- 1 992 468**
**DE-U- 8 133 578**
**DE-U- 8 526 503**
**US-A- 4 570 806**

(73) Patentinhaber: **Neuhäuser, Helmut, Dipl.-Ing.,**
**Scharnhorststrasse 16, D-4670 Lünen(DE)**

(72) Erfinder: **Neuhäuser, Helmut, Dipl.-Ing.,**
**Scharnhorststrasse 16, D-4670 Lünen(DE)**

(74) Vertreter: **Honke, Manfred, Dr., Patentanwälte**
**Andrejewski, Honke & Partner**
**Theaterplatz 3 Postfach 10 02 54, D-4300 Essen 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Regalanlage mit mehreren Regalen, die jeweils eine Mehrzahl von übereinander angeordneten Regalfächern und jeweils beidseitig Auflagerprofile für in die Regalfächer einlagerbare Paletten aufweisen, mit einer mehrere Regale bedienenden verfahrbaren Beschick- und Entnahmevorrichtung für Paletten mit zumindest einem Hubwerk für in die Regalfächer einfahrbare bzw. ausfahrbare Beschick- und Entnahmeholme, welche die Paletten an mit der Palettenoberseite fluchtenden Auflagerschenkeln untergreifen, die an den beiden Schmalseiten der Paletten angeordnet sind.

Es ist eine derartige Regalanlage bekannt, bei welcher die Beschick- und Entnahmeholme an eine höhenverfahrbare Traverse angeschlossen sind. Die Beschick- und Entnahmevorrichtung wird auf den Regalen verfahren. Folglich müssen sich zwischen den einzelnen Regalen Gänge befinden, die von der Beschick- und Entnahmevorrichtung bzw. einer Laufkatze mit der Traverse überfahrbar sind, weil die Traverse lediglich im Bereich solcher Gänge niedergefahren werden kann. Denn die Laufkatze ist als Portalkatze ausgebildet, die sich über die Breite bzw. Tiefe der einzelnen Regale erstreckt. Diese bekannte Regalanlage ist daher in anlagentechnischer Hinsicht aufwendig und weist verhältnismäßig viel Totraum auf (vgl. DE-U 8 133 578).

Ferner kennt man eine vor und entlang von Regalen verfahrbare Beschick- und Entnahmevorrichtung, und zwar mit einem Hubwagen, der wiederum einen Einlagerungswagen trägt, welcher in die einzelnen Regalfächer einfahrbar ist und dort zum Absetzen bzw. Aufnehmen des Lagergutes dient, bei dem es sich um bestimmte Werkzeuge handeln soll. Die Beschick- und Entnahmevorrichtung besitzt einen Rahmen, der im oberen Regalbereich einer Laufschiene aufgehängt ist und im unteren Regalbereich mittels Laufrollen gegen eine untere Schiene am Regal abgestützt ist (vgl. DE-U 8 526 503). Für die Einlagerung von Paletten ist diese Regalanlage kaum geeignet.

Außerdem ist eine Regalanlage mit einem in den Gängen zwischen den Regalen verfahrbaren Hubständer bekannt. Dieser schienengebundene Hubständer weist eine Vertikalführung für einen höhenverfahrbaren Tragarm auf, auf dem eine Beschick- und Entnahmevorrichtung angeordnet ist. Diese Beschick- und Entnahmevorrichtung weist quer zu dem Fahrweg des Hubständers teleskopierende und in die Regalfächer einfahrbare bzw. ausfahrbare Beschick- und Entnahmeholme auf, welche nicht Paletten, sondern Lagerwannen beidseitig untergreifen. Dazu weisen die Lagerwannen beidseitig entsprechende Randprofile auf. Darüber hinaus besitzen die Lagerwannen bodenseitig quer verlaufende Lagerausnehmungen, mit denen sie auf entsprechende Auflagerprofile in den Regalfächern verschiebesicher aufgesetzt werden. Eine raumsparende Einlagerung der Lagerwannen ist bei dieser bekannten Konstruktion kaum möglich (vgl. US-A 4 570 806).

Der Erfindung liegt die Aufgabe zugrunde, eine Regalanlage der eingangs beschriebenen Ausführungen zu schaffen, die sich durch eine besonders einfache, funktionsgerechte und insbesondere raumsparende Bauweise auszeichnet, wobei eine exakte und reibungsunabhängige Palettenführung im Zuge der Ein- und Auslagerung gewährleistet ist.

Diese Aufgabe löst die Erfindung bei einer gattungsgemäßen Regalanlage dadurch, daß die Beschick- und Entnahmevorrichtung einen unmittelbar vor und entlang nebeneinander angeordneter Regale bodenverfahrbaren Rahmen mit vertikalen Führungsprofilen aufweist, daß die Beschick- und Entnahmeholme an höhenverfahrbaren Kragarmen, die von einer zwischen den vertikalen Führungsprofilen mit dem Hubwerk auf und ab verfahrbaren Traversenkonstruktion getragen sind, in die Regalfächer einfahrbar bzw. ausfahrbar gelagert sind, daß die Kragarme Antriebseinrichtungen für die Beschick- und Entnahmeholme aufweisen, daß die Kragarme mit den Beschick- und Entnahmeholmen zu der den Regalfächern abgewandten Seite vorkragen, und daß ein Palettenübergabewagen für den An- und Abtransport der mittels der Beschick- und Entnahmeholme von dem Palettenübergabewagen abnehmbaren bzw. darauf ablegbaren Paletten vorgesehen ist. Diese Maßnahmen der Erfindung haben zur Folge, daß die Beschick- und Entnahmevorrichtung unter Bildung eines Regalganges zwischen zwei Regalreihen angeordnet werden kann, also eine beidseitige Beschickung von sich gegenüber liegenden Regalanlagen ermöglicht. Insoweit wird raumsparende Bauweise bei einer Regalanlage mit einer bodenverfahrbaren Beschick- und Entnahmevorrichtung sowie mit minimiertem Totraum erreicht, weil sich die Paletten nach wie vor praktisch dicht bei dicht in die Regalfächer einlagern lassen. Darüber hinaus wird durch die Lagerung der Beschick- und Entnahmeholme an höhenverfahrbaren Kragarmen mit Antriebseinrichtungen für die Beschick- und Entnahmeholme eine exakte Palettenführung beim Ein- und Auslagerungsvorgang gewährleistet. Ferner ist mit Hilfe der ein- und ausfahrbaren Beschick- und Entnahmeholme praktisch eine reibungsfreie Ein- und Auslagerung der Paletten in die einzelnen Regalfächer möglich.

Weitere erfindungswesentliche Merkmale sind im folgenden aufgeführt. So können die Paletten als Kassetten ausgebildet sein, wobei die Höhe der Beschick- und Entnahmeholme geringer als die Kassettentiefe gewählt ist, also insoweit auch eine totraumsparende Ausbildung für die Beschick- und Entnahmeholme erreicht wird. Erfindungsgemäß weisen die Kragarme und die Beschick- und Entnahmeholme eine die Breite der Paletten bzw. Kassetten übersteigende Länge auf, so daß die Beschick- und Entnahmeholme bis über den Schwerpunkt der eingelagerten Paletten hinaus in die Regalfächer einfahrbar sind. Dennoch können verhältnismäßig kurz gehaltene Beschick- oder Entnahmeholme bzw. Kragarme eingesetzt werden. Denn es besteht die Möglichkeit, die Paletten gleichsam schrittweise in die Regalfächer einzulagern bzw. auszulagern. Dazu wird beispielsweise die betreffende Palette zunächst von den Beschick- und Entnahmeholmen unterfahren, angehoben, auf den Beschick- und Entnahmeholmen um ein vorgegebenes Maß aus dem betreffenden Regalfach herausgefahren, erneut auf den Auflagerprofilen abgesetzt, wobei jedoch der Palettenschwerpunkt nicht nach außen vorkragt sondern im Regalfachbereich bzw. oberhalb des Auflagerbereiches verbleibt. Anschließend werden Beschick- und Entnahmeholme erneut in das Regalfach eingefahren, wiederum angehoben und fahren dann die Palette vollständig aus dem Regalfach bis in eine Position oberhalb der Kragarme heraus. Die Antriebseinrichtungen für das Hoch- und Niederfahren der Kragarme sowie für das Ein- und Ausfahren der Beschick- und Entnahmeholme sind als pneumatische, hydraulische oder elektrische Antriebsmotoren mit davon angetriebenen Reibrädern oder Ritzeln ausgeführt, wobei die Ritzel in Zahnstangen oder Zahnstangenprofile der Beschick- und Entnahmeholme sowie der Führungsprofile für die Kragarme eingreifen.

Nach einem Vorschlag der Erfindung ist vorgesehen, daß die Beschick- und Entnahmeholme jeweils von zwei Ritzeln am vorderen und hinteren Ende der Kragarme beaufschlagt und an den Kragarmen geführt in unter Bildung eines Regalganges beidseitig der Beschick- und Entnahmevorrichtung angeordnete Regale bzw. Regalfächer einfahrbar sind. Es besteht also die Möglichkeit, die aus einem Regalfach auf den Beschick- und Entnahmeholmen herausgefahrene Palette in ein Regalfach auf der anderen Seite der Kragarme einzufahren und dort abzulegen. Tatsächlich ist die erfindungsgemäße Beschick- und Entnahmevorrichtung so eingerichtet, daß sie zwischen zwei Regalreihen bzw. Regalanlagen arbeiten kann. Auch daraus resultiert eine Erhöhung der Speicherkapazität auf engstem Raum. Der Abstand der Kragarme ist zweckmäßigerweise größer als die Länge des Palettenübergabewagens gewählt, so daß das von den Beschick- und Entnahmeholmen getragene Lagergut an den Palettenübergabewagen abgegeben werden kann, indem die Kragarme mit den Beschick- und Entnahmeholmen beidseitig des Palettenübergabewagens unter dessen Ladeniveau abgesenkt werden. Der gegenüber den Kragarmen sowie Beschick- und Entnahmeholmen C-förmig gestaltete Palettenübergabewagen kann dennoch nach dem Niederfahren der Kragarme bzw. Beschick- und Entnahmeholme entlang der Regalanlage mit dem aufgenommenen Lagergut verfahren werden, weil sich die Kragarme bzw. Beschick- und Entnahmeholme dann in dem C-förmigen Freibereich befinden. Denn vorzugsweise weist der Palettenübergabewagen ein zu den Regalen hin offenes C-förmiges Fahrgestell auf.

Die durch die Erfindung erreichten Vorteile sind im wesentlichen darin zu sehen, daß eine Regalanlage verwirklicht wird, die sich durch minimierten Totraum bzw. optimierte Lagerkapazität auf engstem Raum auszeichnet. Denn bei der erfindungsgemäßen Regalanlage ist die Beschick- und Entnahmevorrichtung so ausgebildet, daß einerseits das Lagergut bzw. die Palette für den Be- und Entladevorgang nicht länger unterfahren, sondern seitlich untergriffen werden, während andererseits Regalanlagen beidseitig der Beschick- und Entnahmevorrichtung unter Bildung eines Regalganges von eben der gleichen Beschick- und Entnahmevorrichtung be- und entladen werden können. Darüber hinaus zeichnet sich die Beschick- und Entnahmevorrichtung durch eine besonders einfache und funktionsgerechte sowie selbst platzsparende Bauweise aus, wobei eine exakte und reibungsunabhängige Palettenführung im Zuge der Ein- und Auslagerung gewährleistet ist.

Im folgenden wird die Erfindung anhand einer lediglich ein Ausführungsbeispiel darstellenden Zeichnung näher erläutert; es zeigen:

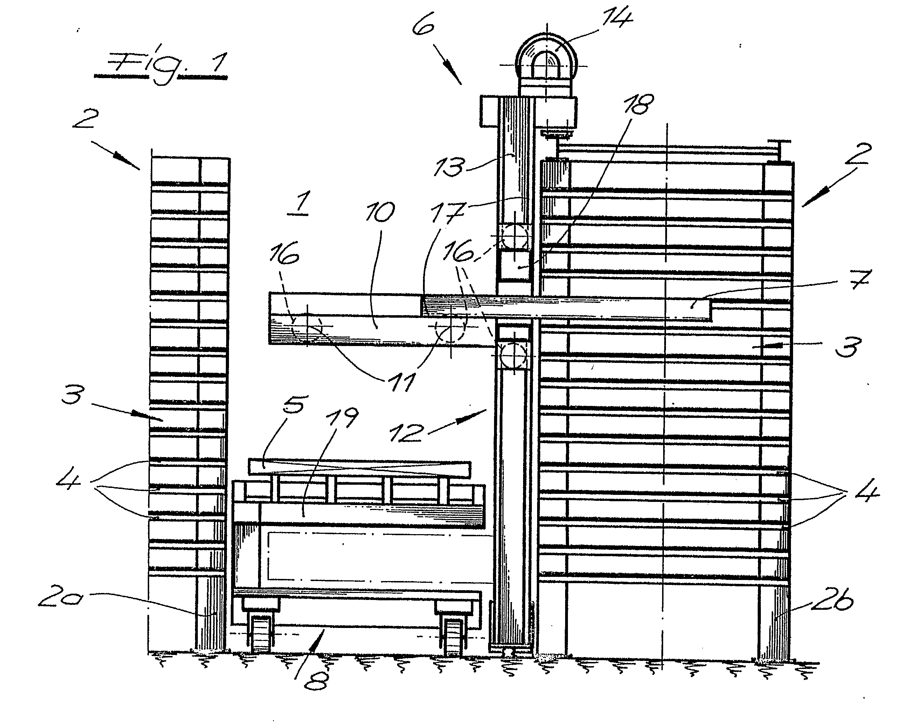

Fig. 1 eine erfindungsgemäße Regalanlage in schematischer Seitenansicht,

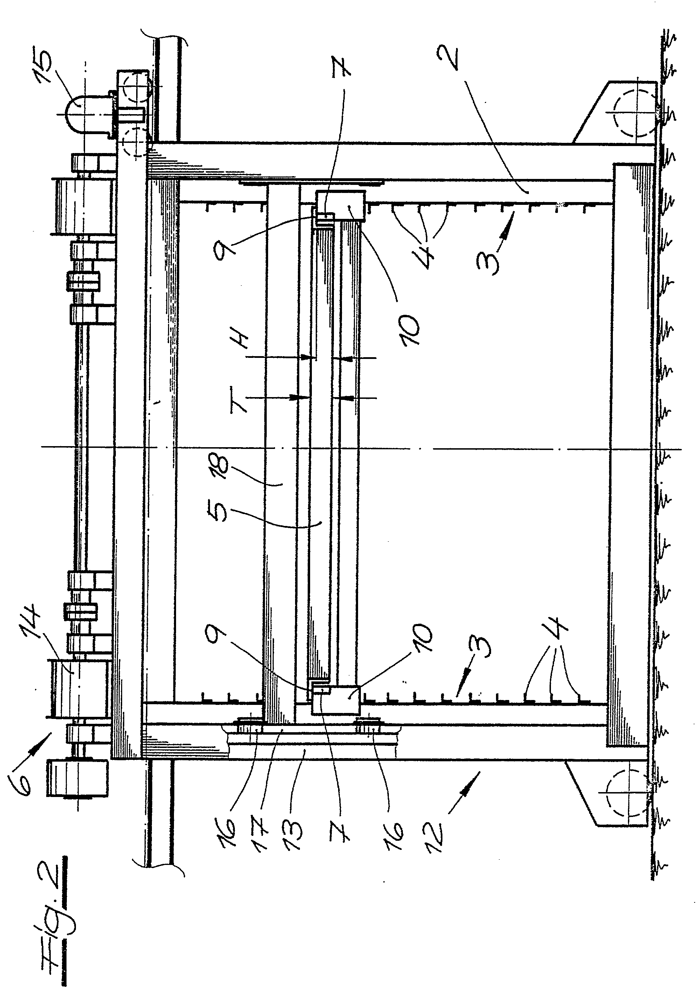

Fig. 2 den Gegenstand nach Fig. 1 in schematischer Frontansicht und teilweise im Vertikalschnitt,

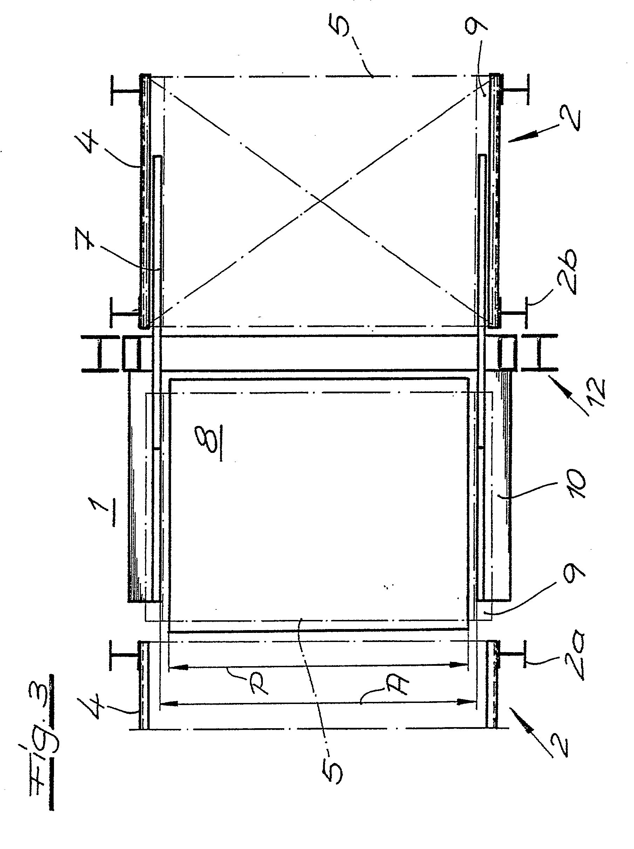

Fig. 3 eine Aufsicht auf den Gegenstand nach Fig. 1,

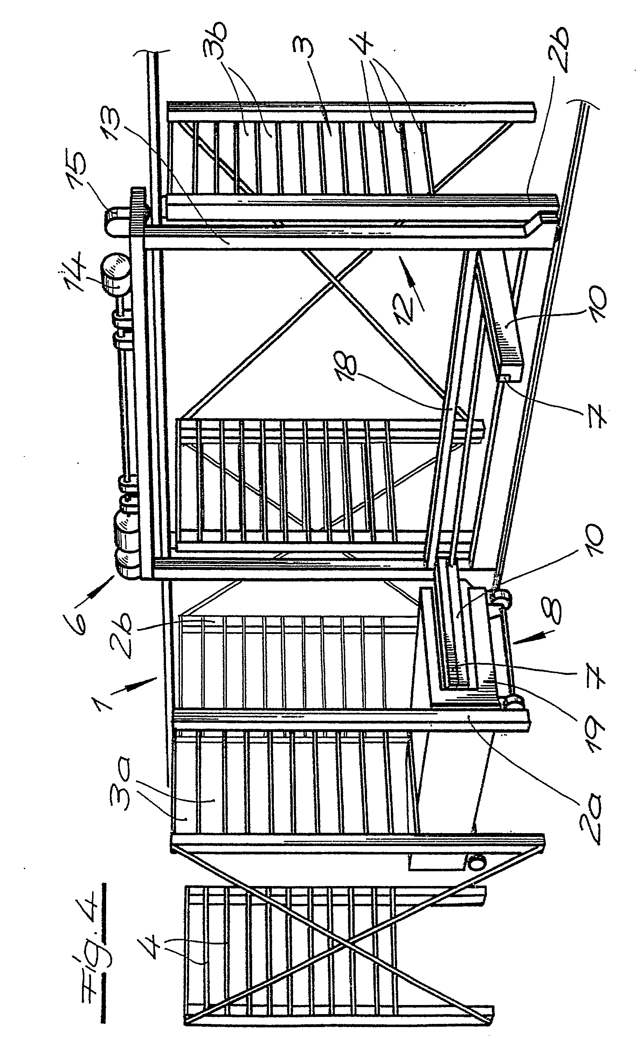

Fig. 4 einen Ausschnitt aus dem Gegenstand nach Fig. 2 in perspektivischer Darstellung, und

Fig. 5 eine schrittweise Palettenübergabe zwischen den Regalfächern zwei sich unter Bildung eines Regalganges gegenüberliegenden Regalen.

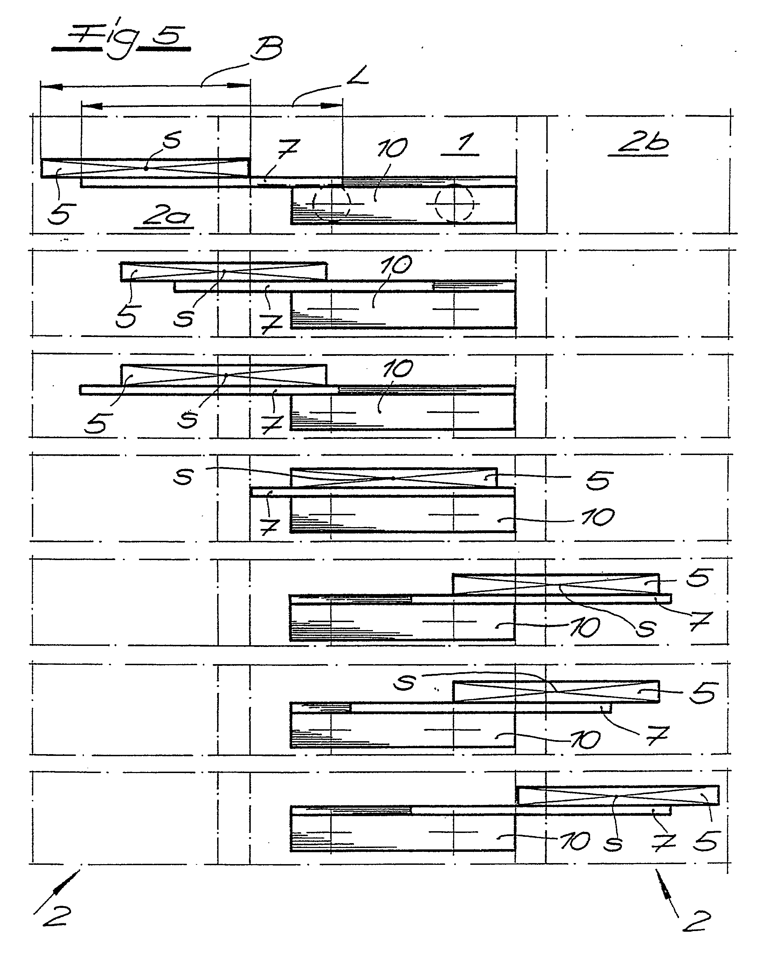

In den Figuren ist eine Regalanlage mit nebeneinander und unter Bildung eines Regalganges 1 gegenüber angeordneten Regalen 2 mit einer Mehrzahl von übereinander angeordneten Regalfächern 3 mit jeweils beidseitig Auflagerprofilen 4 für die in die Regalfächer 3 einlagerbare Paletten 5 dargestellt. Diese Regalanlage weist ferner eine entlang der Regale 2 verfahrbare Beschick- und Entnahmevorrichtung 6 mit zumindest einem Hubwerk für in die Regalfächer 3 einfahrbare bzw. ausfahrbare Beschick- und Entnahmeholme 7 auf, ferner einen Palettenübergabewagen 8 für den An- und Abtransport der mittels der Beschick- und Entnahmeholme 7 von dem Palettenübergabewagen 8 abnehmbaren bzw. ablegbaren Paletten bzw. Lagergut. Die Paletten 5 weisen beidseitig mit der Palettenoberseite fluchtende von den Beschick- und Entnahmeholmen 7 unterfahrbare Auflagerschenkel 9 auf. Die Beschick- und Entnahmeholme 7 sind an höhenverfahrbaren Kragarmen 10 der Beschick- und Entnahmevorrichtung 6 in die Regalfächer 3 einfahrbar bzw. ausfahrbar gelagert. Die Kragarme 10 weisen Antriebseinrichtungen 11 für die Beschick- und Entnahmeholme 7 auf. Die Paletten 5 sind als Kassetten ausgebildet, wobei die Höhe H der Beschick- und Entnahmeholme 7 geringer als die Kassettentiefe T gewählt ist, so daß die Paletten 5 bzw. Kassetten unter Minimierung des Totraumes übereinander angeordnet werden können. Denn der sonst für Beschick- und Entnahmewagen oder Gabelzinken erforderliche Manipulationszwischenraum kann nunmehr entfallen. Die Beschick- und Entnahmevorrichtung 6 weist einen unmittelbar vor den Regalen 2 verfahrbaren Rahmen 12 mit vertikalen Führungsprofilen 13 und Antriebseinrichtungen 14 für die Kragarme 10 auf. Die Kragarme und die daran geführten Beschick- und Entnahmeholme 7 kragen zu der den Regalfächern 3 abgewandten Seite vor, befinden sich also bei gegenüber angeordneten Regalen 2 in dem dann gebildeten Regalgang 1. Der Rahmen 12 ist auf seiner einen Seite zusätzlich auf den Regalen 2 geführt und dort mit einer Antriebseinrichtung 15 ausgerüstet, die aus einem Antriebsmotor mit Ritzel und einer Zahnstange bestehen kann. Die Kragarme 10 und die Beschick- und Entnahmeholme 7 weisen eine die Breite B der Paletten 5 bzw. Kassetten geringfügig übersteigende Länge L auf, wobei die Beschick- und Entnahmeholme 7 bis über den Schwerpunkt S der eingelagerten Paletten 5 hinaus in die Regalfächer 3 einfahrbar sind. Die Antreibseinrichtungen 11, 14 besitzen auch in diesem Fall Antriebsmotoren und davon angetrieben Reibräder oder Ritzel 16, wobei die Ritzel in Zahnstangen 17 oder Zahnstangenprofile der Beschick- und Entnahmeholme 7 sowie der Führungsprofile 13 eingreifen. Die Beschick- und Entnahmeholme 7 sind jedenfalls von zwei Ritzeln 16 am vorderen und hinteren Ende der Kragarme 10 beaufschlagt. Ferner sind die Beschick- und Entnahmeholme 7 an den Kragarmen 10 geführt in unter Bildung des Regalganges 1 beidseitig der Beschick- und Entnahmevorrichtung 6 angeordnete Regale bzw. Regalfächer 3 einfahrbar und ausfahrbar. Im einzelnen lassen sich die Paletten 5 schrittweise aus den Regalfächern 3 des einen Regals 2a in die Regalfächer 3 eines anderen gegenüberstehenden Regals 2b übergeben. Dazu werden die Beschick- und Entnahmeholme 7 zunächst vollständig in das betreffende Regalfach 3a eingefahren, angehoben und mit der aufgenommenen Palette 5 soweit zurückgefahren, daß der Palettenschwerpunkt S sich in vertikaler Projektion noch über den Auflagerprofilen 4 befindet. Dort wird die Palette 5 vorübergehend abgesetzt. Anschließend werden die Beschick- und Entnahmeholme 7 erneut vollständig in das betreffende Regalfach 3a eingefahren, nehmen die abgesetzte Palette 5 wieder auf und fahren sie aus dem Regalfach 3a vollständig heraus, so daß sich die Palette 5 schließlich über den Kragarmen 10 befindet. Von dort kann die Palette 5 im umgekehrten Bewegungszyklus in ein Regalfach 3b des gegenüberstehenden Regals 2b abgegeben werden, nachdem die Kragarme 10 mit den Beschick- und Entnahmeholmen 7 sowie der Palette 5 zunächst auf die Höhe des betreffenden Regalfaches 3b gefahren worden sind. Dieser schrittweise Entlade- und Beladevorgang ist in Fig. 5 dargestellt. - Die Kragarme 10 sind von einer zwischen den Führungsprofilen 13 hochfahrbaren Traversenkonstruktion 18 getragen, wobei der Abstand A der Kragarme 10 größer als die Länge P des Palettenübergabewagens 8 gewählt ist. Dadurch lassen sich die Kragarme 10 mit den Beschick- und Entnahmeholmen 7 beidseitig des Palettenübergabewagens 8 so tief absenken, daß die Palette 5 bzw. das Lagergut aus einer Kassette auf den Palettenübergabewagen 8 abgesetzt wird. Der Palettenübergabewagen 8 weist ein zu den Regalen 2 hin offenes C-förmiges Fahrgestell 19 auf, läßt sich dadurch bei abgesenkten Kragarmen 10 bzw. Beschick- und Entnahmeholmen 7 längs der Regalanlage verfahren, zumal sich die abgesenkten Kragarme 10 bzw. Beschick- und Entnahmeholme 7 im Freibereich des C-förmigen Fahrgestells 19 befinden.

## Patentansprüche

1. Regalanlage mit mehreren Regalen (2), die jeweils eine Mehrzahl von übereinander angeordneten Regalfächern (3) und jeweils beidseitig Auflagerprofile (4) für in die Regalfächer (3) einlagerbare Paletten (5) aufweisen, mit einer mehrere Regale (2) bedienenden verfahrbaren Beschick- und Entnahmevorrichtung (6) für Paletten mit zumindest einem Hubwerk für in die Regalfächer (3) einfahrbare bzw. ausfahrbare Beschick- und Entnahmeholme (7), welche die Paletten (5) an mit der Palettenoberseite fluchtenden Auflagerschenkeln (9) untergreifen, die an den beiden Schmalseiten der Paletten (5) angeordnet sind, dadurch gekennzeichnet, daß die Beschick- und Entnahmevorrichtung (6) einen unmittelbar vor und entlang nebeneinander angeordneter Regale (2) bodenverfahrbaren Rahmen (12) mit vertikalen Führungsprofilen (13) aufweist, daß die Beschick- und Entnahmeholme (7) an höhenverfahrbaren Kragarmen (10), die von einer zwischen den vertikalen Führungsprofilen (13) mit dem Hubwerk auf und ab verfahrbaren Traversenkonstruktion (18) getragen sind, in die Regalfächer (3) einfahrbar bzw. ausfahrbar gelagert sind, daß die Kragarme (10) Antriebseinrichtungen (11) für die Beschick- und Entnahmeholme (7) aufweisen, daß die Kragarme (10) mit den Beschick- und Entnahmeholmen (7) zu der den Regalfächern (2) abgewandten Seite vorkragen, und daß ein Palettenübergabewagen (8) für den An- und Abtransport der mittels der Beschick- und Entnahmeholme (7) von dem Palettenübergabewagen (8) abnehmbaren bzw. darauf ablegbaren Paletten (5) vorgesehen ist.

2. Regalanlage nach Anspruch 1, dadurch gekennzeichnet, daß die Paletten (5) als Kassetten ausgebildet sind, wobei die Höhe (H) der Beschick- und Entnahmeholme (7) geringer als die Kassettentiefe (T) gewählt ist.

3. Regalanlage nach Anspruch 1 oder 2, dadurch gekennzeichnet, daß die Kragarme (10) und die Beschick- und Entnahmeholme (7) eine die Breite (B) der Paletten (5) bzw. Kassetten übersteigende Länge (L) aufweisen und die Beschick- und Entnahmeholme (7) bis über den Schwerpunkt (S) der eingelagerten Paletten (5) hinaus in die Regalfächer (3) einfahrbar sind.

4. Regalanlage nach einem der Ansprüche 1 bis 3, dadurch gekennzeichnet, daß die Antriebseinrichtungen (11, 14) für die Beschick- und Entnahmeholme (7) und Kragarme (10) Antriebsmotoren und davon angetriebene Reibräder oder Ritzel (16) aufweisen, wobei die Ritzel (16) in Zahnstangen (17) oder Zahnstangenprofile der Beschick- und Entnahmeholme (7) sowie Führungsprofile (13) eingreifen.

5. Regalanlage nach einem der Ansprüche 1 bis 4, dadurch gekennzeichnet, daß die Beschick- und Entnahmeholme (7) jeweils von zwei Ritzeln (16) am vorderen und hinteren Ende der Kragarme (10) beaufschlagt und an den Kragarmen (10) geführt in unter Bildung eines Regalganges (1) beidseitig der Beschick- und Entnahmevorrichtung (6) angeordnete Regale bzw. Regalfächer (3) einfahrbar sind.

6. Regalanlage nach einem der Ansprüche 1 bis 5, dadurch gekennzeichnet, daß der Abstand (A) der Kragarme (10) größer als die Länge (P) des Palettenübergabewagens (8) gewählt ist.

7. Regalanlage nach einem der Ansprüche 1 bis 6, dadurch gekennzeichnet, daß der Palettenübergabewagen (8) ein zu den Regalen (2) hin offenes C-förmiges Fahrgestell (19) aufweist.

## Claims

1. A shelving system with several sets of shelves (2) each of which possesses a plurality of shelf compartments (3) located one above another and each of which possesses support profiles (4) on both sides for the pallets (5) that can be stored in the shelf compartments (3), with a transportable loading and removal appliance (6) serving several sets of shelves (2) for pallets with at least one lifting mechanism for loading and removal spars (7) that can be moved into or out of the shelf compartments (3) that grip the pallets (5) from below at support flanks (9) that are located at the two small sides of the pallets (5) and are aligned with their upper surfaces, characterized in that the loading and removal appliance (6) possesses a frame (12) movable along the floor directly before and along adjacent sets of shelves (2) and having vertical guidance profiles (13), that the loading and removal spars (7) are supported and movable into or out of the shelf compartments (3) on cantilevers (10) displaceable in height, borne on a girder construction (18) movable up and down by the lifting mechanism between the vertical guidance profiles (13), that the cantilevers (10) possess driving mechanisms (11) for the loading and removal spars (7), that the cantilevers (10) with the loading and removal spars (7) project to the side facing away from the shelf compartments (3), and that a pallet transfer car (8) is provided for transport to and fro of the pallets (5) that can be removed from or deposited on the pallet transfer car (8) by means of the loading and removal spars (7).

2. A shelving system according to claim 1, characterized in that the pallets (5) are constructed as cassettes, the height (H) of the loading and removal spars (7) being designed to be less than the depth (T) of the cassettes.

3. A shelving system according to claim 1 or 2, characterized in that the cantilevers (10) and the loading and removal spars (7) have a length (L) that exceeds the width (B) of the pallets (5) or cassettes, and the loading and removal spars (7) can be moved into the shelf compartments (3) until they are beyond the centres of gravity (S) of the stored pallettes (5).

4. A shelving system according to one of claims 1 to 3, characterized in that the driving equipments (11, 14) for the loading and removal spars (7) and the cantilevers (10) are driving motors and friction wheels or pinion gears (16) driven by them, the pinion gears (16) meshing with toothed racks (17) or toothed rack profiles of the loading and removal spars (7) or guidance profiles (13).

5. A shelving system according to one of claims 1 to 4, characterized in that each of the loading and removal spars (7) is acted upon by two pinion gears (16) at the front and rear ends of the cantilevers (10) and, carried on the cantilevers (10), can be introduced into shelves or shelf compartments (3) located on both sides of the loading and removal appliance (6), forming a passage (1) between the shelves.

6. A shelving system according to one of claims 1 to 5, characterized in that the spacing (A) of the cantilevers (10) is designed to be greater than the length (P) of the pallet transfer car (8).

7. A shelving system according to one of claims 1 to 6, characterized in that the pallet transfer car (8) possesses a C-shaped undercarriage (19) that is open towards the set of shelves (2).

## Revendications

1. Installation de rayonnages comportant plusieurs rayonnages (2) qui présentent chacun une pluralité de compartiments (3) de rayonnages disposés les uns au-dessus des autres et des profils de support (4) destinés à des palettes (5) susceptibles d'être déposées dans les compartiments (3) de rayonnages, comportant un dispositif (6) de chargement et de déchargement susceptible d'être déplacé, desservant plusieurs rayonnages (2), destiné à des palettes, comportant au moins un mécanisme élévateur destiné à des bras (7) de chargement et de déchargement susceptibles d'être introduits dans les compartiments (3) de rayonnages, respectivement d'en être retirés, lesquels saisissent les palettes (5) par le dessous sur des ailes (9) de support qui affleurent la face supérieure des palettes et qui sont disposées sur les deux côtés étroits des palettes (5), caractérisée par le fait que le dispositif (6) de chargement et de déchargement présente un cadre (12) comportant des profils de guidage verticaux (13) susceptibles d'être déplacés au sol immédiatement devant des rayonnages disposés les uns à côté des autres, et le long de ceux-ci, en ce que les bras (7) de chargement et de déchargement sont portés par des bras (10) en porte-à-faux susceptibles d'être déplacés dans le sens de la hauteur, qui sont eux-mêmes portés par une structure de traverses susceptible d'être déplacée vers le haut et vers le bas entre les profils de guidage verticaux (13) au moyen du mécanisme élévateur, et dans laquelle des compartiments (3) de rayonnages sont montés de manière à pouvoir être introduits et respectivement retirés, en ce que les bras (10) en porte-à-faux présentent des dispositifs d'entraînement (11) destinés aux branches (7) de fourche de chargement et de déchargement, en ce que les bras en porte-à-faux (10) comportant les branches (7) de fourche de chargement et de déchargement font saillie du côté dirigé à l'opposé des compartiments (2) de rayonnages, et en ce qu'un chariot (8) de transfert de palettes est prévu pour l'amenage et l'enlèvement des palettes (5) susceptibles d'être retirées du chariot (8) de transfert de palettes au moyen des branches (7) de fourche de chargement et de déchargement et respectivement d'y être déposées.

2. Installation de rayonnages selon la revendication 1, caractérisée en ce que les palettes (5) sont conformées en cassettes, la hauteur (H) des branches (7) de fourche de chargement et de déchargement étant choisie de plus faible dimension que celle de la profondeur (T) des cassettes.

3. Installation de rayonnages selon la revendication 1 ou 2, caractérisée en ce que les bras (10) en porte-à-faux et les bras 7 de chargement et de déchargement présentent une longueur (L) qui excède la largeur (B) des palettes (5), respectivement des cassettes, et en ce que les bras 7 de chargement et de déchargement peuvent être introduits dans les compartiments (3) de rayonnages au-delà du centre de gravité (S) des palettes (5) stockées.

4. Installation de rayonnages selon une des revendications 1 à 3, caractérisée en ce que les dispositifs d'entraînement (11, 14) présentent des moteurs d'entraînement, et des roues à friction ou des pignons (16) entraînés par ceux-ci, destinés aux bras 7 de chargement et de déchargement et aux bras (10) en porte-à-faux, les pignons (16) attaquant des crémaillères (17) ou des profils formant crémaillère des branches (7) de chargement et de déchargement, ainsi que des profils de guidage (13).

5. Installation de rayonnages selon une des revendications 1 à 4, caractérisée en ce que les bras 7 de chargement et de déchargement sont soumis à l'action de deux pignons (16) à l'extrémité avant et à l'extrémité arrière des bras (10) en porte-à-faux et peuvent être introduits en étant guidés sur les bras (10) en porte-à-faux dans les rayonnages, respectivement les compartiments (3) de rayonnages disposés en formant une allée (1) de rayonnages de chaque côté du dispositif (6) de chargement et de déchargement.

6. Installation de rayonnages selon une des revendications 1 à 5, caractérisée en ce que l'écart (A) des bras (10) en porte-à-faux est choisi plus grand que la longueur (P) du chariot (8) de transfert de palettes.

7. Installation de rayonnages selon une des revendications 1 à 6, caractérisée en ce que le chariot (8) de transfert de palettes présente un châssis roulant (19) en forme de C ouvert en direction des rayonnages (2).

Fig. 1

EP 0 242 730 B1

Fig. 2

EP 0 242 730 B1

Fig. 3

EP 0 242 730 B1

Fig. 4

Fig 5